# EUROPÄISCHE PATENTSCHRIFT

(11) **EP 3 647 851 B1**
(45) Veröffentlichungstag und Bekanntmachung des Hinweises auf die Patenterteilung: **18.09.2024**
(21) Anmeldenummer: 19202625.0
(22) Anmeldetag: 11.10.2019
(51) Int. Cl.: G02B 21/00, G02B 21/36, G01N 21/952, G01N 21/88

(54) **MIKROSKOPIE-VORRICHTUNG ZUR ERSTELLUNG DREIDIMENSIONALER ABBILDER**
MICROSCOPY DEVICE FOR PRODUCING THREE-DIMENSIONAL IMAGES
DISPOSITIF DE MICROSCOPIE PERMETTANT DE GÉNÉRER DES IMAGES TRIDIMENSIONNELLES

(30) Priorität: 30.10.2018 AT 509302018
(43) Veröffentlichungstag der Anmeldung: 06.05.2020
(73) Patentinhaber: AIT Austrian Institute of Technology GmbH, 1210 Wien (AT)
(72) Erfinder: TRAXLER, Lukas, 3842 Thaya (AT); STOLC, Svorad, 831 01 Bratislava (SK)
(74) Vertreter: Wildhack & Jellinek Patentanwälte

(56) Entgegenhaltungen:
- US-A1- 2008 208 005
- US-A1- 2015 219 886
- US-A1- 2018 249 051
- US-B1- 9 274 323

## Beschreibung

Die Erfindung betrifft eine Mikroskopie-Vorrichtung zur Erstellung dreidimensionaler Abbilder von im Bereich einer Gegenstandsebene befindlichen Gegenständen gemäß dem Oberbegriff von Patentanspruch 1.

Aus dem Stand der Technik sind verschiedene Inspektionssysteme für die dreidimensionale Untersuchung von mikroskopischen Gegenständen bekannt. Eine Methode, die in diesem Zusammenhang üblicherweise im Bereich der mikroskopischen Untersuchung Anwendung findet, ist die Depth-From-Focus-Rekonstruktion, die die geringe Tiefenschärfe mikroskopischer Linsen ausnützt. Für eine dreidimensionale Rekonstruktion sind dabei eine Anzahl von Scans eines Gegenstands aufgenommen in unterschiedlichen Entfernungen entlang der optischen Achse erforderlich. Diese Rekonstruktionsmethode ist jedoch für eine dreidimensionale Inspektion im laufenden Produktionsprozess nur bedingt einsetzbar, da die Scanrichtung nicht mit der Transportrichtung des zu untersuchenden Gegenstands übereinstimmt und der transportierte Gegenstand zur Erstellung von Aufnahmen angehalten werden muss. Weiters ist es für die Aufnahme größerer Bildflächen erforderlich, mehrere Teilaufnahmen zusammenzusetzen. Auch bei der Erstellung dreidimensionaler Aufnahmen mittels Konfokalmikroskopie sind diese Limitationen vorhanden, sodass ein Einsatz für Inline-Inspektionen im laufenden Produktionsprozess mit unterbrechungsfreiem Objekttransport zu stark eingeschränkt möglich ist.

Aufgabe der Erfindung ist es daher, eine Mikroskopie-Vorrichtung bereitzustellen, die eine einfache dreidimensionale Rekonstruktion von zu untersuchenden Gegenständen im laufenden Produktionsprozess erlaubt, wenn die Transportrichtung der Gegenstände nicht in Richtung der optischen Achse der Mikroskopie-Vorrichtung orientiert ist.

Aus der US 9274323 B1 ist eine hyperzentrische Linsenanordnung bekannt, die eine erste Linsenanordnung mit einem ersten, asphärischen Linsenelement und einem zweiten Linsenelement, das das vom ersten Linsenelement emittierte Licht auf einen Punkt bündelt, sowie eine zweite Linsenanordnung, deren Eintrittspupille an der Position dieses Punkts liegt. Die zweite Linsenanordnung refokussiert das Licht und bildet das Abbild eines Gegenstands, der vor der ersten Linsenanordnung platziert wird, ab.

Die Anordnung aus US 9274323 B1 lässt durch die hyperzentrische Projektion, im Gegensatz zu klassischen Mikroskop-Aufnahmen, eine perspektivische Abbildung von Objekten zu. Jedoch lässt die Anordnung keine Extraktion von 3D-Inforamtion, im speziellen Tiefeninformation entlang der optischen Achse, zu.

Die Erfindung löst diese Aufgabe bei einer Mikroskopie-Vorrichtung zur Erstellung dreidimensionaler Abbilder von in einem ebenen Objektbereich befindlichen Gegenständen, umfassend eine Objektivlinsen-Anordnung mit einer Objektivlinsen-Brennweite, eine Tubuslinsen-Anordnung mit einer Tubuslinsen-Brennweite und einen Sensor. Die Objektivlinsen-Anordnung und die Tubuslinsen-Anordnung weisen dabei eine gemeinsame optische Achse auf und ein Objektbereich zur Anordnung zu untersuchender Gegenstände ist in dem von der Tubuslinsen-Anordnung abgewandten Bereich der Objektlinsen-Anordnung von der Objektivlinsen-Anordnung beabstandet angeordnet. Der Sensor ist in dem von der Objektivlinsen-Anordnung abgewandten Bereich der Tubuslinsen-Anordnung von der Tubuslinsen-Anordnung beabstandet angeordnet und dazu ausgebildet, Abbilder zu untersuchender Gegenstände wiederzugeben, insbesondere aufzunehmen. Weiters ist seine Blende vorgesehen, durch deren Blendenöffnung die gemeinsame optische Achse verläuft, wobei die Blende und/oder die Blendenöffnung in einem Bereich der gemeinsamen optischen Achse zwischen dem Sensor und demjenigen Brennpunkt der Objektivlinsen-Anordnung liegt, der zwischen der Objektivlinsen-Anordnung und Tubuslinsen-Anordnung angeordnet ist.

Erfindungsgemäß ist dabei vorgesehen, dass
- in einer gemeinsamen normal zur optischen Achse stehenden Brennebene der Brennpunkt der Objektivlinsen-Anordnung und der Brennpunkt der Tubuslinsen-Anordnung zusammenfallen und
- die Blende im Bereich zwischen der gemeinsamen Brennebene und der Tubuslinsen-Anordnung oder im Bereich zwischen der Tubuslinsen-Anordnung und dem Sensor angeordnet ist, sodass eine hyperzentrische perspektivische Projektion entsteht.

Mit einer auf diese Weise ausgestalteten Mikroskopie-Vorrichtung kann eine hyperzentrische perspektivische Projektion mit einer vergleichsweise größeren Tiefenschärfe erzielt werden. Die geringe Tiefenschärfe eines üblichen mikroskopischen Systems wird durch Hinzufügen einer zusätzlichen Blende vergrößert. Durch die Positionierung der Blende entlang der optischen Achse kann die perspektivische Projektion der optischen Komponenten modifiziert werden, sodass ein Gegenstand aus verschiedenen Winkeln betrachtet werden kann. Durch diese Modifikation ist vorteilhafterweise eine dreidimensionale mikroskopische Rekonstruktion basierend auf einem Structure-From-Motion-Algorithmus möglich. Die Blende ist dabei so positioniert, dass eine hyperzentrische perspektivische Projektion entsteht.

Eine hyperzentrische Projektion, bei der das Perspektivitätszentrum bzw. die Eintrittspupille von der Objektivlinsen-Anordnung aus betrachtet hinter dem zu untersuchenden Gegenstand liegt, ist besonders vorteilhaft, da die Blende innerhalb der Mikroskopoptik untergebracht ist und der Beleuchtungsstrahlengang nicht behindert wird.. Derart können technische Probleme vermieden werden, wie diese z.B. bei einer entozentrischen Projektion auftreten, wo die Blende zwischen der Objektivlinsen-Anordnung und dem Objektbereich, d.h. im Beleuchtungsstrahlengang, angeordnet ist.

Wenn die Blende im Bereich zwischen der gemeinsamen Brennebene und der Tubuslinsen-Anordnung angeordnet ist, kann eine erfindungsgemäßen Mikroskopie-Vorrichtung mit hyperzentrischer perspektivischer Projektion besonders kompakt ausgeführt werden.

Bevorzugt kann eine hyperzentrische Projektion bei einer Mikroskopie-Vorrichtung erzielt werden, wenn die Blende in dem von der Objektivlinsen-Anordnung abgewandten Bereich der Tubuslinsen-Anordnung angeordnet ist.

Um eine möglichst hohe Tiefenauflösung sicherzustellen, kann vorgesehen sein, dass die Blende in einem Abstand von größer als das 1,1-Fache der Objektivlinsen-Brennweite, insbesondere größer als das 1,3-Fache der Objektivlinsen-Brennweite, von der Objektivlinsen-Anordnung angeordnet ist.

Eine möglichst gute laterale Auflösung kann erzielt werden, wenn dass die numerische Apertur der Objektivlinsen-Anordnung durch die Blende um 50% bis 95% reduziert ist.

Eine ausreichende Beleuchtung des Objektbereichs kann sichergestellt werden, wenn eine ringförmige Beleuchtungseinheit vorgesehen ist, die zwischen dem Objektbereich und der Objektivlinsen-Anordnung angeordnet ist und auf den Objektbereich gerichtet ist, wobei insbesondere vorgesehen ist, dass der Durchmesser der Beleuchtungseinheit den Durchmesser der Objektivlinsen-Anordnung übersteigt. Derart kann vorteilhafterweise eine Dunkelfeld-Beleuchtung des Objektbereichs erzielt werden. Durch die Verwendung einer derartigen ringförmigen Beleuchtungseinheit können beispielsweise auch bestehende Mikroskopie-Vorrichtungen für eine Inspektion im laufenden Produktionsbetrieb nachgerüstet werden.

Eine effektive Beleuchtung des Objektbereichs kann vorteilhafterweise erzielt werden, wenn eine, insbesondere ebene, Beleuchtungseinheit zwischen der Objektivlinsen-Anordnung und der Tubuslinsen-Anordnung, insbesondere parallel zur gemeinsamen optischen Achse und/oder von dieser beabstandet, angeordnet ist, und ein Strahlteiler zwischen der Objektivlinsen-Anordnung und der Tubuslinsen-Anordnung angeordnet ist, wobei der Strahlteiler in einem Winkel 10° bis 80°, insbesondere von 30° bis 60°, vorzugsweise 45°, zur gemeinsamen optischen Achse derart angeordnet und ausgerichtet ist, dass das von der Beleuchtungseinheit abgestrahlte Licht über den Strahlteiler durch die Objektivlinsen-Anordnung hindurch auf den Objektbereich fällt.

Durch den Einbau der Beleuchtungseinheit zwischen der Objektivlinsen-Anordnung und der Tubuslinsen-Anordnung werden keine zusätzlichen äußeren Anbauten an der Mikroskopie-Vorrichtung benötigt und durch die Verwendung eines Strahlteilers ist sichergestellt, dass das von der Beleuchtungseinheit abgestrahlte Licht optimal auf den Objektbereich gelenkt wird. Auf diese Weise kann eine Hellfeld-Beleuchtung des Objektbereichs erzielt werden.

Um eine optimale Beleuchtung des Objektbereichs zu erzielen, die in Kombination mit kontinuierlichen oder zeitlich beabstandeten Aufnahmen eines im Objektbereich der Mikroskopie-Vorrichtung befindlichen Gegenstands zur Vereinfachung einer dreidimensionalen Rekonstruktion des Gegenstands beiträgt, kann vorgesehen sein, dass die Beleuchtungseinheit dazu ausgebildet ist, den Objektbereich, insbesondere im Objektbereich befindliche Gegenstände, kontinuierlich und/oder in vorgegebenen regelmäßigen zeitlichen Abständen zu beleuchten.

Um eine dreidimensionale Rekonstruktion von Gegenständen aus während des Produktionsprozesses von den Gegenständen erstellten mikroskopischen Aufnahmen zu ermöglichen, können eine Steuereinheit und eine Transporteinheit vorgesehen sein,
wobei die Transporteinheit dazu ausgebildet ist, Gegenstände in einer Transportebene translatorisch entlang zumindest einer Transportrichtung und/oder rotatorisch entlang zumindest eines Transportpfads durch den Objektbereich der Mikroskopie-Vorrichtung, insbesondere kontinuierlich, zu transportieren,
wobei die Transportebene und/oder die zumindest eine Transportrichtung im Wesentlichen senkrecht zur gemeinsamen optischen Achse ausgerichtet ist und/oder die Rotationsachse der Rotationsbewegung des zumindest einen Transportpfads parallel zur gemeinsamen optischen Achse ist und
wobei die Steuereinheit dazu ausgebildet ist, die Transporteinheit zum Transport von Gegenständen entlang der zumindest einen Transportrichtung und/oder des zumindest einen Transportpfads anzusteuern.

Auf diese Weise ist sichergestellt, dass dreidimensionale Rekonstruktionen von Gegenständen erstellt werden können, während die Gegenstände linear entlang einer Transportrichtung durch den Objektbereich der Mikroskopie-Vorrichtung transportiert werden oder alternativ oder zusätzlich dazu entlang eines Transportpfads z.B. eine Rotationsbewegung im Objektbereich vollführen. Dies bedeutet, dass eine beliebige Bewegung des Gegenstands in der Gegenstandsebene möglich ist.

Um die Erstellung eine Abfolge von Aufnahmen des Gegenstands aus verschiedenen Betrachtungswinkeln zu erleichtern, während dieser durch den Objektbereich der Mikroskopie-Vorrichtung bewegt wird, kann vorgesehen sein, dass
- der Sensor dazu ausgebildet ist, während des Transports eines zu untersuchenden Gegenstands durch den Objektbereich eine Abfolge von in vorgegebenen regelmäßigen zeitlichen Abständen, insbesondere in zeitlichen Abständen von 4 ms bis 12,5 ms, insbesondere von 6,5 bis 10 ms, aufgenommenen Momentaufnahmen zu erstellen,
- die Beleuchtungseinheit dazu ausgebildet ist, den Objektbereich, insbesondere den im Objektbereich befindlichen Gegenstand, kontinuierlich zu beleuchten und
- Steuereinheit dazu ausgebildet ist, den Sensor in vorgegebenen regelmäßigen zeitlichen Abständen zur Erstellung von Aufnahmen und die Beleuchtungseinheit zur kontinuierlichen Beleuchtung des Objektbereichs anzusteuern.

Eine Abfolge von Aufnahmen des Gegenstands aus verschiedenen Betrachtungswinkeln für einfache dreidimensionale Rekonstruktion eines Gegenstands kann z. B. mit Hilfe eines Structure-From-Motion-Algorithmus erzielt werden, wenn
- der Sensor dazu ausgebildet ist, während des Transports eines zu untersuchenden Gegenstands durch den Objektbereich kontinuierlich Aufnahmen des Gegenstands zu erstellen,
- die Beleuchtungseinheit dazu ausgebildet ist, den Objektbereich, insbesondere den im Objektbereich befindlichen Gegenstand, in vorgegebenen regelmäßigen zeitlichen Abständen, insbesondere in zeitlichen Abständen von 4 ms bis 12,5 ms, insbesondere von 6,5 bis 10 ms, zu beleuchten und
- die Steuereinheit dazu ausgebildet ist, den Sensor zur Erstellung von kontinuierlichen Aufnahmen und die Beleuchtungseinheit zur Beleuchtung des Objektbereichs in vorgegebenen regelmäßigen zeitlichen Abständen anzusteuern.

Um eine dreidimensionale Rekonstruktion von kontinuierlich durch den Objektbereich bewegten Gegenständen zu ermöglichen, wobei gleichzeitig sichergestellt ist, dass keine bzw. nur eine geringe Bewegungsunschärfe auftritt, kann vorgesehen sein, dass die Verschlusszeit des Sensors derart gewählt ist, dass die durch den Transport des Gegenstands relativ zum Sensor bedingte Bewegungsunschärfe am Sensor kleiner als 1 Pixel ist.

Eine vorteilhafte dreidimensionale Rekonstruktion kann mit Hilfe eines Structure-from Motion-Algorithmus erzielt werden, wenn die Beleuchtungsdauer der Beleuchtungseinheit derart gewählt ist, dass die durch den Transport des Gegenstands relativ zum Sensor bedingte Bewegungsunschärfe am Sensor kleiner als 1 Pixel ist.

Auf diese Weise ist gewährleistet, dass die Lichtpulse kurz genug sind, sodass der aufzunehmende Gegenstand während der Beleuchtungszeit nicht bzw. nur um einen kurzen Weg weitertransportiert wird, sodass eine möglichst kleine Bewegungsunschärfe sichergestellt ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1a den Aufbau und Strahlengang eines ersten Ausführungsbeispiels einer erfindungsgemäßen Mikroskopie-Vorrichtung, bei der sich ein Gegenstand im Objektbereich dem Bereich der gemeinsamen optischen Achse nähert,
Fig. 1b die Mikroskopie-Vorrichtung aus Fig. 1a, wobei sich der Gegenstand im Bereich der gemeinsamen optischen Achse befindet,
Fig. 1c die Mikroskopie-Vorrichtung aus Fig. 1a, wobei der Gegenstand den Bereich der gemeinsamen optischen Achse verlassen hat,
Fig. 2 ein zweites Ausführungsbeispiel einer Mikroskopie-Vorrichtung, bei der sich die Blende zwischen der Objektivlinsen-Anordnung und dem Sensor befindet,
Fig. 3 ein drittes Ausführungsbeispiel einer erfindungsgemäßen Mikroskopie-Vorrichtung mit einer Beleuchtungseinheit und einem Strahlteiler,
Fig. 4 ein viertes Ausführungsbeispiel mit einer ringförmigen Beleuchtungseinheit,
Fig. 5 einen aufzunehmenden Gegenstand,
Fig. 6a eine Detailaufnahme der Mikroskopie-Vorrichtung aus Fig. 1a während sich der Gegenstand im Bereich der gemeinsamen optischen Achse nähert,
Fig. 6b eine Detailaufnahme der Mikroskopie-Vorrichtung aus Fig. 1a während sich der Gegenstand im Bereich der optischen Achse befindet,
Fig. 6c eine Detailaufnahme der Mikroskopie-Vorrichtung aus Fig. 1a nachdem der Gegenstand den Bereich der gemeinsamen optischen Achse verlassen hat,
Fig. 7a das in Fig. 6a erstellte Abbild,
Fig. 7b das in Fig. 6b erstellte Abbild,
Fig. 7c das in Fig. 6c erstellte Abbild.

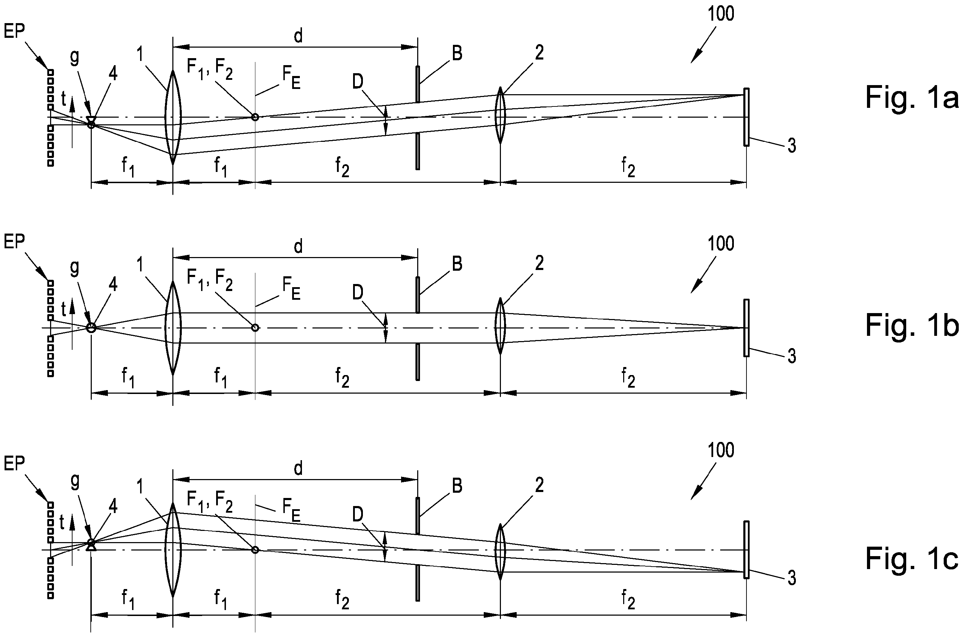

Fig. 1a bis 1c zeigen schematisch ein erstes Ausführungsbeispiel einer erfindungsgemäßen Mikroskopie-Vorrichtung 100 zur Erstellung dreidimensionaler Abbilder von im Bereich einer Gegenstandsebene befindlichen Gegenständen. In den Fig. 1a bis 1c ist dabei jeweils eine Schnittansicht durch die optischen Komponenten der Mikroskopie-Vorrichtung 100 dargestellt. Die Mikroskopie-Vorrichtung 100 umfasst im gezeigten Ausführungsbeispiel eine Objektivlinsen-Anordnung 1 mit einer Objektivlinsen-Brennweite f₁ und einem Objektivlinsen-Brennpunkt F₁, sowie eine Tubuslinsen-Anordnung 2 mit einer Tubuslinsen-Brennweite f₂ und einem Tubuslinsen-Brennpunkt F₂. Unter der Objektivlinsen-Anordnung 1 bzw. der Tubuslinsen-Anordnung 2 ist im Zusammenhang mit der Erfindung jeweils eine Kombination mehrerer optischer Linsen zu verstehen, die als eine gemeinsame Objektivlinse bzw. Tubuslinse wirken. Alternativ kann eine Linsenanordnung auch nur aus einer einzelnen Linse bestehen.

Wie in den Fig. 1a bis 1c ersichtlich ist, weisen die Objektivlinsen-Anordnung 1 und die Tubuslinsen-Anordnung 2 der Mikroskopie-Vorrichtung 100 eine gemeinsame optische Achse auf. Ein Objektbereich g zur Anordnung zu untersuchender Gegenstände 4, durch den die Gegenstandsebene verläuft, ist im von der Tubuslinsen-Anordnung 2 abgewandten Bereich der Objektivlinsen-Anordnung 1 und von der Objektivlinsen-Anordnung 1 beabstandet angeordnet.

Die Mikroskopie-Vorrichtung 100 umfasst weiters einen Sensor 3, im vorliegenden Ausführungsbeispiel ein Flächensensor mit in Zeilen und Spalten angeordneten lichtsensitiven Sensorpixeln. Der Sensor 3 ist in dem von der Objektivlinsen-Anordnung 1 abgewandten Bereich der Tubuslinsen-Anordnung 2 von der Tubuslinsen-Anordnung 2 beabstandet angeordnet. Dies bedeutet, dass sich der Sensor 3, wie in den Fig. 1a bis 1c ersichtlich ist, vom Objektbereich g aus gesehen hinter der Tubuslinsen-Anordnung 2 befindet. Der Sensor 3 ist dazu ausgebildet, Abbilder zu untersuchender Gegenstände 4 wiederzugeben bzw. aufzunehmen.

Die Gegenstandsebene g verläuft im gezeigten Ausführungsbeispiel durch den Brennpunkt F₁ der Objektivlinsen-Anordnung 1 im von der Tubuslinsen-Anordnung 2 abgewandten Bereich der Objektivlinsen-Anordnung 1 und ist parallel zur Ebene des Sensors 3 angeordnet.

Weiters umfasst die Mikroskopie-Vorrichtung 100 eine Blende B, durch deren Blendenöffnung D die gemeinsame optische Achse verläuft. Die Blende B ist dabei in einem Bereich der gemeinsamen optischen Achse zwischen demjenigen Brennpunkt F₁ der Objektivlinsen-Anordnung 1, der der Tubuslinsen-Anordnung 2 zugewandt ist und dem Sensor 3 angeordnet.

Diese Anordnung der Blende B gewährleistet eine hyperzentrische Perspektive, bei der das Perspektivitätszentrum im Raum hinter dem zu untersuchenden Gegenstand 4, also im von der Mikroskopie-Vorrichtung 100 abgewandten Bereich liegt. Aufgrund der hyperzentrischen Perspektive werden von der Objektivlinsen-Anordnung 1 weiter entfernte Gegenstandspunkte größer am Sensor 3 abgebildet als Gegenstandspunkte, die der Objektivlinsen-Anordnung 1 näher sind. Die Eintrittspupille EP, also das objektseitige Bild der Blende B, liegt bei einer hyperzentrischen Projektion hinter dem Objektbereich g, d.h. im von der Objektivlinsen-Anordnung 1 abgewandten Bereich des Objektbereichs g, wie dies in den Fig. 1a bis Fig. 4 dargestellt ist.

Wie in den Fig. 1a bis 1c ersichtlich ist, fallen im ersten Ausführungsbeispiel der Brennpunkt F₁ der Objektivlinsen-Anordnung 1 und der Brennpunkt F₂ der Tubuslinsen-Anordnung 2 in einer gemeinsamen normal zur optischen Achse stehenden Brennebene F_{E} zusammen. Die Blende B ist im Bereich zwischen der gemeinsamen Brennebene F_{E} und der Tubuslinsen-Anordnung 2 angeordnet. Der Mittelpunkt der Blendenöffnung D liegt im gezeigten ersten Ausführungsbeispiel auf der gemeinsamen optischen Achse.

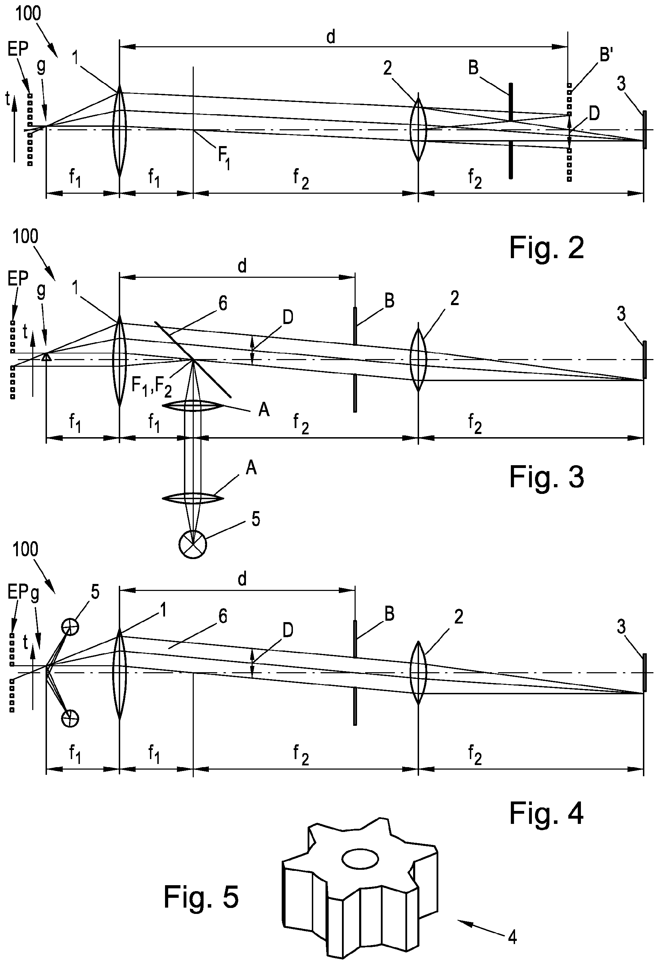

Fig. 2 zeigt ein zweites Ausführungsbeispiel einer erfindungsgemäßen Mikroskopie-Vorrichtung 100, bei der die Blende B in dem von der Objektivlinsen-Anordnung 1 abgewandten Bereich der Tubuslinsen-Anordnung 2 angeordnet ist. Die Blende B ist dabei im gezeigten Ausführungsbeispiel zwischen der Tubuslinsen-Anordnung 2 und dem Sensor 3 angeordnet. Auch eine derartige Anordnung der optischen Komponenten gewährleistet eine hyperzentrische Perspektive bei einer erfindungsgemäßen Mikroskopie-Vorrichtung 100. Dabei fungiert das von der Tubuslinsen-Anordnung 2 erzeugte, virtuell erzeugte, Abbild B' der Blende B als optisch wirksame Blende.

Da die Position der Blende innerhalb der Mikroskopie-Vorrichtung 100 die Tiefenauflösung aufgrund perspektivischer Parallaxen in verschiedenen Aufnahmen beeinflusst, kann die Blende B bei allen Ausführungsformen einer erfindungsgemäßen Mikroskopie-Vorrichtung 100 in einem Abstand d von größer als das 1,1-fache der Objektivlinsen-Brennweite f₁ von der Objektivlinsen-Anordnung 1 angeordnet sein. Eine verbesserte Tiefenauflösung wird in diesem Zusammenhang erzielt, wenn die Blende B bei einer erfindungsgemäßen Mikroskopie-Vorrichtung 100 in einem Abstand d von der Objektivlinsen-Anordnung 1 angeordnet ist, der größer als das 1,3-fache der Objektivlinsen-Brennweite f₁ ist.

Je größer der gewählte Abstand d der Blende B von der Objektivlinsen-Anordnung 1 gewählt ist, desto stärker ist die hyperzentrische Perspektive ausgeprägt und desto besser ist die Tiefenauflösung.

Der Durchmesser D der Blende B beeinflusst die laterale optische Auflösung der Mikroskopie-Vorrichtung 100. Um eine ausreichend gute laterale optische Auflösung zu gewährleisten, ist der Durchmesser D der Blende B bei allen Ausführungsformen einer erfindungsgemäßen Mikroskopie-Vorrichtung 100 derart gewählt, dass die numerische Apertur der Objektivlinsen-Anordnung 1 auf 5 bis 50% der numerischen Apertur im Vergleich zu einem Einbauzustand der Objektivlinsen-Anordnung 1 ohne Blende B verkleinert wird. Dies bedeutet, dass die numerische Apertur der Objektivlinsen-Anordnung 1 durch die Blende B um 50 bis 95% im Vergleich zu einem Einbau ohne Blende B reduziert ist.

Als numerische Apertur der Objektivlinsen-Anordnung 1 ist in diesem Zusammenhang zu verstehen, in welchem Winkel von einem betrachteten Gegenstand 4 ausgehendes Licht von der Objektivlinsen-Anordnung 1 eingefangen werden kann. Im Rahmen der Erfindung wird für die perspektivische Aufnahme eines Gegenstands 4 nur ein kleiner Bereich des vom Gegenstand 4 abgestrahlten Lichtkegels genutzt, wobei die Richtung kontrolliert wird, in der der Gegenstand 4 betrachtet wird.

Ist nun beispielsweise die numerische Apertur der Objektivlinsen-Anordnung 1 auf 5% der numerischen Apertur ohne Blende B eingeschränkt, so ist es möglich, Gegenstände 4 in einem großen Winkelbereich bei ausreichender lateraler Auflösung zu betrachten. Ist die numerische Apertur auf 50% der numerischen Apertur im Einbauzustand ohne Blende B reduziert, so ist eine Betrachtung des Gegenstands 4 in einem eingeschränkteren, jedoch ausreichend großen Winkelbereich bei gleichzeitig verbesserter lateraler Auflösung möglich.

Um eine ausreichende Beleuchtung des Objektbereichs g bei einer Mikroskopie-Vorrichtung 100 sicherzustellen, kann die Mikroskopie-Vorrichtung 100 unterschiedliche Arten von Beleuchtungseinheiten 5 umfassen. Beispiele hierfür sind in den Fig. 3 und 4 dargestellt. Derartige Beleuchtungseinheiten 5 können mit jeder Ausführungsform einer erfindungsgemäßen Mikroskopie-Vorrichtung 100 kombiniert werden.

Fig. 3 zeigt beispielhaft ein drittes Ausführungsbeispiel einer erfindungsgemäßen Mikroskopie-Vorrichtung 100 mit einer Beleuchtungseinheit 5, die zwischen der Objektivlinsen-Anordnung 1 und der Tubuslinsen-Anordnung 2 angeordnet ist. Durch diese Anordnung kann die Beleuchtungseinheit 5 beispielsweise in einem gemeinsamen Gehäuse mit der Objektivlinsen-Anordnung 1 und der Tubuslinsen-Anordnung 2 verbaut sein. Im gezeigten Ausführungsbeispiel ist weiters ein Strahlteiler 6 zwischen der Objektivlinsen-Anordnung 1 und der Tubuslinsen-Anordnung 2 angeordnet. Der Strahlteiler 6 ist dabei in einem Winkel von 45° zur gemeinsamen optischen Achse ausgerichtet und der Flächenschwerpunkt bzw. der Volumenschwerpunkt des Strahlteilers 6 liegt in der gemeinsamen Brennebene F_{E} im Brennpunkt F₁ der Objektivlinsen-Anordnung, der mit dem Brennpunkt F₂ der Tubuslinsen-Anordnung 2 zusammenfällt.

Diese Ausrichtung bzw. Anordnung des Strahlteilers 6 ist jedoch keinesfalls zwingend, es reicht aus, wenn der Strahlteiler 6 zwischen der Tubuslinsen-Anordnung 2 und der Objektivlinsen-Anordnung 1 angeordnet ist und in einem Winkel von 10 bis 80°, insbesondere von 30° bis 60°, zur gemeinsamen optischen Achse angeordnet und ausgerichtet ist, sodass das von der Beleuchtungseinheit 5 abgestrahlte Licht über den Strahlteiler 6 durch die Objektivlinsen-Anordnung 1 hindurch auf den Objektbereich g der Mikroskopie-Vorrichtung 100 fällt.

Im gezeigten Ausführungsbeispiel wird das von der Beleuchtungseinheit 5 ausgehende Licht weiters über zwei Linsenanordnungen A auf den Strahlteiler 6 gerichtet. Derartige Linsenanordnungen sind aber nicht zwingend erforderlich. Bei der Beleuchtungseinheit 5 kann es sich beispielsweise um eine ebene, flächige Lichtquelle handeln, die parallel zur gemeinsamen optischen Achse und beabstandet von dieser angeordnet sein kann.

Als Strahlteiler werden üblicherweise z. B. einfache mehrschichtvergütete Glasplättchen verwendet, die durch eine Vergütung bzw. Veränderung der Oberflächeneigenschaften auf einer Seite teilweise reflektierende bzw. teilweise transmissive Eigenschaften aufweisen.

Da bei mikroskopischen Verfahren Doppelbilder unerwünscht sind, wie sie beispielsweise durch die Verwendung von plattenförmigen Strahlteilern, die an beiden Seiten vergütet sind, entstehen würden, sind würfelförmige Strahlteiler zur Verwendung in der Mikroskopie-Vorrichtung 100 besonders gut geeignet. Bei einem derartigen würfelförmigen Strahlteiler handelt es sich um einen Glaswürfel, der diagonal geschnitten wird, wobei eine der Schnittflächen vergütet wird und die beiden Würfelteile anschließend mit einem optischen Kitt wieder verbunden werden. Auf diese Weise ist der würfelförmige Strahlteiler nur an einer Fläche teilreflektierend ausgebildet, sodass keine unerwünschten Doppelbilder entstehen.

Fig. 4 zeigt ein viertes Ausführungsbeispiel einer erfindungsgemäßen Mikroskopie-Vorrichtung 100 mit einer ringförmigen Beleuchtungseinheit 5, die einen Durchmesser aufweist, der den Durchmesser der Objektivlinsen-Anordnung 1 übersteigt und zwischen dem Objektbereich g und der Objektivlinsen-Anordnung 1 angeordnet ist und auf den Objektbereich g gerichtet ist. Durch diese Wahl des Durchmessers wird der Objektbereich g ausreichend beleuchtet, während gleichzeitig sichergestellt ist, dass die Objektivlinsen-Anordnung 1 nicht durch die Beleuchtungseinheit 5 verdeckt wird. Bei einer derartigen Beleuchtungseinheit 5 ist vorteilhafterweise auch ein nachträglicher Anbau an eine bestehenden Mikroskopie-Vorrichtung 100 möglich.

Die in Fig. 3 und Fig. 4 dargestellten Beleuchtungsarten des Objektbereichs g unterscheiden sich in ihrem Beleuchtungswinkel. Wird z. B. eine Mikroskopie-Vorrichtung 100 mit einer in Fig. 3 dargestellten Beleuchtungseinheit 5 verwendet, wird eine Hellfeld-Beleuchtung des Objektbereichs g erzielt, während durch die ringförmige Beleuchtungseinheit 5 aus Fig. 4 eine Dunkelfeld-Beleuchtung des Objektbereichs g sichergestellt ist. Je nach zu untersuchendem Gegenstand 4, ist es beispielsweise vorteilhaft, eine Dunkelfeld-Beleuchtung zu verwenden, wenn der Gegenstand 4 eine metallisch reflektierende Oberfläche aufweist, oder eine Hellfeld-Beleuchtung, wenn der Gegenstand 4 eine matte Oberfläche besitzt.

Derartige in einer erfindungsgemäßen Mikroskopie-Vorrichtung 100 verbaute Beleuchtungseinheiten 5 können nun einerseits den Objektbereich g bzw. im Objektbereich g befindliche Gegenstände 4 kontinuierlich beleuchten. Zusätzlich oder alternativ dazu können die Beleuchtungseinheiten 5 dazu ausgebildet sein, den Objektbereich g in vorgegebenen regelmäßigen zeitlichen Abständen zu beleuchten, sodass diese beispielsweise kurz aufeinander folgende Lichtblitze abgeben und der Objektbereich g zwischen den Lichtblitzen unbeleuchtet ist.

Eine erfindungsgemäße Mikroskopie-Vorrichtung 100 kann optional auch eine Steuereinheit 8 und eine Transporteinheit umfassen, was besonders vorteilhaft für den Einsatz im laufenden Produktions- oder Fertigungsbetrieb ist. Die Transporteinheit ist dabei dazu ausgebildet, Gegenstände 4 in einer Transportebene relativ zu den optischen Komponenten der Mikroskopie-Vorrichtung 100, d.h. den Linsen-Anordnungen 1, 2 und den Sensor 3, zu bewegen. Dabei kann die Transporteinheit Gegenstände 4 in der Transportebene translatorisch linear entlang zumindest einer Transportrichtung t transportieren. Zusätzlich oder alternativ dazu kann die Transporteinheit auch dazu ausgebildet sein, Gegenstände 4 entlang eines Transportpfads in einer Rotationsbewegung durch den Objektbereich g der Mikroskopie-Vorrichtung 100 zu transportieren. Der Transport erfolgt dabei insbesondere kontinuierlich, beispielsweise wenn Gegenstände 4 im Produktionsbetrieb inspiziert werden sollen.

Die Transportebene steht dabei im Wesentlichen senkrecht zur gemeinsamen optischen Achse der Linsen-Anordnungen 1, 2, wie dies beispielsweise in den Fig. 1a bis 1c dargestellt ist. Bei der Bewegung des Gegenstands 4 in den Fig. 1a bis 1c handelt es sich um eine planare Bewegung, wobei der Gegenstand 4 von der Transporteinheit bzw. dem Förderband 7 linear entlang der Transportrichtung t transportiert wird.

Die Steuereinheit 8 ist in diesem Fall dazu ausgebildet, die Transporteinheit zum Transport von Gegenständen 4 entlang der zumindest einen Transportrichtung t und/oder des zumindest einen Transportpfads anzusteuern. In der Steuereinheit 8 können dazu beispielsweise verschiedene Transportgeschwindigkeiten und Koordinaten von Transportpfaden hinterlegt sein, sodass sie eine entsprechende Ansteuerung der Transporteinheit ermöglicht.

Vorteil einer Transportvorrichtung und einer Steuereinheit 8, die nicht nur einen linearen Transport von Gegenständen 4, sondern verschiedene Bewegungsrichtungen beispielsweise auch spiralförmig an den optischen Komponenten der Mikroskopie-Vorrichtung 100 vorbei ermöglichen, ist, dass auf diese Weise im Produktionsprozess schnell große Flächen erfasst werden können.

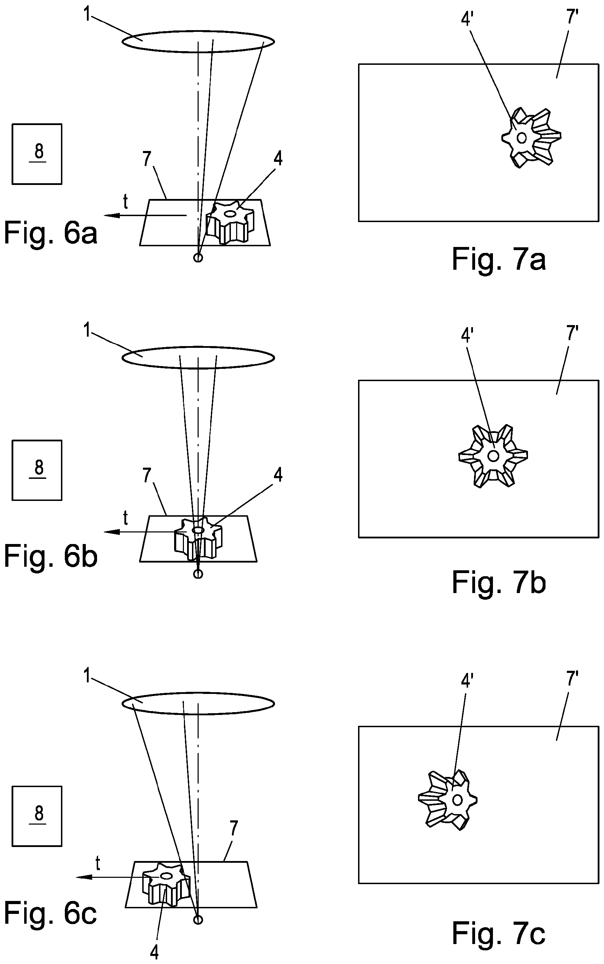

Als Beispiel für einen zu untersuchenden Gegenstand 4 ist in Fig. 5 ein Zahnrad dargestellt. In den Fig. 6a bis 6c sind beispielhaft Detailaufnahmen der in den Fig. 1a bis 1c dargestellten Mikroskopie-Vorrichtung 100 gezeigt, während das Zahnrad aus Fig. 5 durch den Objektbereich g der Mikroskopie-Vorrichtung 100 linear entlang einer Transportrichtung t von einer Transporteinheit transportiert wird.

Bei der Transporteinheit handelt es sich im gezeigten Beispiel um eine Einrichtung mit einem Förderband 7, auf dem der Gegenstand 4 bzw. das Zahnrad liegt und bei der sich die Transportebene in der Ebene des Förderbands 7 befindet. Die Steuereinheit 8, die die Transporteinheit ansteuert, ist ebenfalls schematisch angedeutet.

Die Fig. 7a bis 7c zeigen jeweils die vom Sensor 3 aufgenommenen Abbilder 4', 7' des Gegenstands 4 bzw. des zum jeweiligen Aufnahmezeitpunkt im Gegenstandsbereich g befindlichen Abschnitt des Förderbands 7 der Transporteinrichtung.

Beim Sensor 3 handelt es sich im gezeigten Ausführungsbeispiel um einen Sensor mit einer Anzahl von in Zeilen und Spalten angeordneten Pixelsensoren. Die Sensorzeilen, sind in einem Winkel oder normal zur Transportrichtung t ausgerichtet sind und in Transportrichtung t hintereinander, insbesondere parallel zueinander, ausgerichtet. Alternativ dazu kein ein Sensor mit einer beliebigen anderen Anordnung von Sensorzeilen bzw. -spalten verwendet werden.

Wird nun der Gegenstand 4 bzw. das Zahnrad durch den Objektbereich g an den optischen Komponenten der Mikroskopie-Vorrichtung 100 vorbeitransportiert, wird während des Transports eine Abfolge von Aufnahmen des Gegenstands 4 vom Sensor 3 erstellt. Dabei wird jeder Gegenstandspunkt des Gegenstands 4 von den Sensorzeilen des Sensors 3 aufeinanderfolgend in verschiedenen Winkeln aufgenommen, sodass, nachdem der Gegenstand 4 den Objektbereich g der Mikroskopie-Vorrichtung 100 verlassen hat, derselbe Gegenstandspunkt des Gegenstands 4 von allen Sensorzeilen des Sensors 3 jeweils in einem anderen Winkel erfasst wurde.

Diese Veränderung des Winkels, unter dem der Gegenstand 4 aufgenommen wird bzw. unter dem vom Gegenstand 4 reflektiertes Licht aufgenommen wird, ist in den Fig. 6a bis 6c schematisch angedeutet, wobei in Fig. 6a der Gegenstand 4 sich dem Bereich der gemeinsamen optischen Achse entlang der Transportrichtung t annähert, was der schematischen Darstellung der Mikroskopie-Vorrichtung 100 mit dem entsprechenden Strahlengang in Fig. 1a entspricht. In Fig. 6b passiert der Gegenstand 4 den Bereich der optischen Achse, was in Fig. 1b im Detail dargestellt ist, und in Fig. 6c verlässt der Gegenstand 4 den Bereich der gemeinsamen optischen Achse, wofür der Strahlengang in der Mikroskopie-Vorrichtung 100 im Detail in Fig. 1c dargestellt ist.

Wie in den Fig. 7a bis 7c zu erkennen ist, erscheinen aufgrund der hyperzentrischen Perspektive von der Objektivlinsen-Anordnung 1 weiter entfernte Gegenstandspunkte größer als Gegenstandspunkte, die der Objektivlinsen-Anordnung 1 näher sind. Dies ist, wie bereits zuvor erwähnt, dadurch begründet, dass sich bei einer hyperzentrischen Perspektive das Perspektivitätszentrum vom Sensor 3 aus gesehen im Raum hinter dem Gegenstand 4 befindet.

Eine hyperzentrische Projektion ist besonders vorteilhaft, da, im Gegensatz zu einer typischen entozentrischen Projektion, die Blende B nicht zwischen dem Objektbereich g und der dem Objektbereich g zugewandten Brennebene der Objektivlinsen-Anordnung 1 angeordnet zu sein braucht. Derart werden vorteilhafterweise technische Probleme in der Umsetzung vermieden, die sich bei einer entozentrischen Projektion dadurch ergeben, dass bei für einen ausreichenden Perspektivenwinkel die Blende B im Allgemeinen vor der Objektivlinsen-Anordnung 1, also außerhalb der Mikroskopoptik und im Beleuchtungsstrahlengang angeordnet ist. Im Gegensatz dazu ist die Blende B zur Erzielung der hyperzentrischen Projektion in der Mikroskopie-Vorrichtung 100 zwischen der Objektivlinsen-Anordnung 1 und der Tubuslinsen-Anordnung 2 angeordnet, und beeinträchtigt den Beleuchtungsstrahlengang daher nicht.

Weiters können mit einer hyperzentrischen Projektion vorteilhafterweise Oberflächen, die parallel zur gemeinsamen optischen Achse der Linsen-Anordnungen 1, 2 ausgerichtet sind, gleichzeitig mit derjenigen sichtbaren Stirnfläche des Gegenstands 4 erfasst werden, die normal zur gemeinsamen optischen Achse ausgerichtet ist. Dies ist in den Fig. 7a bis 7c zu erkennen, wo die Stirnfläche des Zahnrads relativ kleiner erscheint, als die vom Sensor 3 weiter entfernten Seitenflächen der Zähne des Zahnrads, die parallel zur gemeinsamen optischen Achse ausgerichtet sind, sodass die Stirnfläche und die Seitenflächen gleichzeitig erfassbar sind.

Wird, wie zuvor beschrieben, während des Transports des Gegenstands 4 durch den Objektbereich g eine Abfolge von Aufnahmen des Gegenstands 4 mit unterschiedlichen Aufnahmewinkeln erstellt, ist eine dreidimensionale Rekonstruktion der Oberflächenstruktur des Gegenstands 4 einfach möglich. Dabei werden unter Anwendung eines bekannten Structure-From-Motion-Algorithmus diejenigen Bildpunkte in den Abbildern detektiert und einander zugeordnet, die von unterschiedlichen Sensorzeilen aufgenommenen wurden und denselben Gegenstandspunkt abbilden. Derartige bekannte Structure-From-Motion-Algorithmen sind beispielsweise in Onur Ozyesil, Vladislav Voroninski, Ronen Basri, Amit Singer; "A Survey of Structure from Motion", arXiv:1701.08493 https://arxiv.org/abs/1701.08493, abgerufen am 18.10.2018*, oder* Johannes L. Schönberger, Jan Michael Frahm; 2016, "Structure-from-motion revisited" IEEE Conference on Computer Vision and Pattern Recognition, CVPR 2016 https://demuc.de/papers/schoenberger2016sfm.pdf, abgerufen am 18.10.2018*,* beschrieben.

Umfasst die Mikroskopie-Vorrichtung 100, wie die oben beschrieben, eine Steuereinheit 8 und eine Transporteinheit, so kann die Information der Objektbewegung zwischen den einzelnen Aufnahmen vorteilhafterweise als mathematische Randbedingung in den Algorithmus einbezogen werden, sodass, anders als im klassischen Structure-From-Motion-Ansatz, die Objektbewegung nicht frei aus den Einzelaufnahmen geschätzt werden braucht.

Um eine Serie von Aufnahmen eines zu untersuchenden Gegenstands 4 während des Produktionsprozesses, währenddessen der Gegenstand 4 kontinuierlich transportiert wird, zu erstellen, ohne dass für die Erstellung von Aufnahmen jeweils eine Unterbrechung des Transports bzw. ein Anhalten der Transportvorrichtung bzw. des Förderbands 7 erforderlich ist, erstellt beispielsweise der Sensor 3 während des Transports des zu untersuchenden Gegenstands 4 durch den Objektbereich g kontinuierlich Aufnahmen des Gegenstands 4.

In diesem Fall ist der Sensor 3 vorteilhafterweise mit einer Beleuchtungseinheit 5 kombiniert, die den Objektbereich g bzw. den Gegenstand 4 in regelmäßigen vorgegebenen zeitlichen Abständen beleuchtet, also in gleichmäßigen Zeitabständen Lichtblitze abgibt. Die Steuereinheit 8 ist in diesem Fall dazu ausgebildet, den Sensor 3 zur Erstellung von kontinuierlichen Aufnahmen und die Beleuchtungseinheit 5 zur Beleuchtung des Objektbereichs g in den zuvor erwähnten vorgegebenen regelmäßigen zeitlichen Abständen anzusteuern.

Alternativ oder zusätzlich dazu kann bei allen Ausführungsformen einer erfindungsgemäßen Mikroskopie-Vorrichtung 100 die Beleuchtung des Objektbereichs g durch die Beleuchtungseinheit 5 auch kontinuierlich erfolgen, wobei der Sensor 3 in diesem Fall während des Transports des zu untersuchenden Gegenstands 4 durch den Objektbereich g eine Abfolge von in vorgegebenen regelmäßigen zeitlichen Abständen aufgenommenen Momentaufnahmen erstellt, d.h. in gleichmäßigen Zeitabständen jeweils eine Aufnahme des Gegenstands 4 erstellt. In diesem Fall ist die Steuereinheit 8 dazu ausgebildet, den Sensor 3 in vorgegebenen regelmäßigen zeitlichen Abständen zur Erstellung von Aufnahmen und die Beleuchtungseinheit 5 zur kontinuierlichen Beleuchtung des Objektbereichs g anzusteuern.

Die regelmäßigen zeitlichen Abstände zwischen den Aufnahmen bzw. den Lichtblitzen sind dabei so gewählt, dass einzelne, aus verschiedenen Betrachtungswinkeln aufgenommene, Aufnahmen des Gegenstands 4 überlappen. Dies bedeutet, dass beispielsweise ein Sensor 3 mit hoher Aufnahmegeschwindigkeit gewählt wird, sodass der aufzunehmende Gegenstand 4 bei vergleichsweise hohen Transportgeschwindigkeiten nur soweit im Gegenstandsbereich g transportiert wird, dass eine Überlappung zuwischen aufeinanderfolgend erstellten Aufnahmen vorliegt. Dabei sind Überlappungen von bis zu 90% wünschenswert, um mittels der bekannten Structure-From-Motion-Algorithmen leichter Übereinstimmungen zwischen Abbildern desselben Gegenstandsbereichs in verschiedenen Aufnahmen ermitteln zu können.

Bei beispielsweise 10-facher Vergrößerung, einem 2x2 mm großen Blickfeld und einer gewünschten Überlappung von 80% zwischen zwei aufeinanderfolgend erstellten Aufnahmen des Gegenstands 4, kann der zeitliche Abstand zwischen den Momentaufnahmen bzw. Lichtblitzen bei einer Transportgeschwindigkeit von z.B. 50 mm/s so gewählt sein, dass z. B. eine Überlappung der Aufnahmen von 1,6 mm erzielt wird und somit der Gegenstand 4 zwischen Aufnahmen um 0,4 mm weitertransportiert.

Die zeitlichen Abstände zwischen den Lichtblitzen bzw. den Momentaufnahmen können also vorzugsweise z.B. in einem Bereich von 4 bis 12 ms gewählt sein, was 80 bis 250 Aufnahmen pro Sekunde entspricht. Besonders bevorzugt ist dabei ein Bereich von 6,5 bis 10 ms, was 100 bis 150 Aufnahmen pro Sekunde entspricht.

Der Sensor 3 kann beispielsweise dazu ausgebildet sein, während des Transports eines zu untersuchenden Gegenstands 4 durch den Objektbereich g eine Abfolge von in zeitlichen Abständen von 4 ms bis 12,5 ms, insbesondere von 6,5 bis 10 ms, aufgenommenen Momentaufnahmen zu erstellen, während die Beleuchtungseinheit 5 den Objektbereich g, insbesondere den im Objektbereich g befindlichen Gegenstand 4, kontinuierlich beleuchtet. In diesem Fall ist die Steuereinheit 8 dazu ausgebildet, den Sensor 3 in vorgegebenen regelmäßigen zeitlichen Abständen zur Erstellung von Aufnahmen und die Beleuchtungseinheit 5 zur kontinuierlichen Beleuchtung des Objektbereichs g anzusteuern.

Zusätzlich oder alternativ dazu kann die Beleuchtungseinheit 5 dazu ausgebildet sein, den Objektbereich g, insbesondere den im Objektbereich g befindlichen Gegenstand 4, in zeitlichen Abständen von 4 ms bis 12,5 ms, insbesondere von 6,5 bis 10 ms, zu beleuchten, wobei der Sensor 3 während des Transports eines zu untersuchenden Gegenstands 4 durch den Objektbereich g kontinuierlich Aufnahmen des Gegenstands 4 erstellt. In diesem Fall ist die Steuereinheit 8 dazu ausgebildet, den Sensor 3 zur Erstellung von kontinuierlichen Aufnahmen und die Beleuchtungseinheit 5 zur Beleuchtung des Objektbereichs g in vorgegebenen regelmäßigen zeitlichen Abständen anzusteuern.

Eine exakte dreidimensionale Rekonstruktion des Gegenstands 4 ist bei einer erfindungsgemäßen Mikroskopie-Vorrichtung 100 weiters dadurch sichergestellt, dass vorteilhafterweise eine Bewegungsunschärfe in den einzelnen Aufnahmen des Gegenstands 4 vermieden wird. Dazu wird der Verschluss des Sensors 3 so kurz geschlossen bzw. sind die Zeitabstände zwischen den von der Beleuchtungseinheit 5 abgegebenen Lichtblitzen so kurz gewählt, dass der Gegenstand 4 während der Aufnahme bzw. der Beleuchtungsdauer nicht oder nur soweit bewegt wird, dass die Bewegungsunschärfe am Sensor 3 kleiner als 1 Pixel ist.

## Patentansprüche

1. Mikroskopie-Vorrichtung (100) zur Erstellung dreidimensionaler Abbilder von in einem ebenen Objektbereich (g) befindlichen Gegenständen (4), umfassend eine Objektivlinsen-Anordnung (1) mit einer Objektivlinsen-Brennweite (f₁), eine Tubuslinsen-Anordnung (2) mit einer Tubuslinsen-Brennweite (f₂) und einen Sensor (3),
- wobei die Objektivlinsen-Anordnung (1) und Tubuslinsen-Anordnung (2) eine gemeinsame optische Achse aufweisen,
- wobei ein Objektbereich (g) zur Anordnung zu untersuchender Gegenstände (4) in dem von der Tubuslinsen-Anordnung (2) abgewandten Bereich der Objektivlinsen-Anordnung (1) von der Objektivlinsen-Anordnung (1) beabstandet angeordnet ist, und
- wobei der Sensor (3) in dem von der Objektivlinsen-Anordnung (1) abgewandten Bereich der Tubuslinsen-Anordnung (2) von der Tubuslinsen-Anordnung (2) beabstandet angeordnet ist, wobei der Sensor (3) dazu ausgebildet ist, Abbilder zu untersuchender Gegenstände (4) wiederzugeben, insbesondere aufzunehmen,
- wobei eine Blende (B) vorgesehen ist, durch deren Blendenöffnung (D) die gemeinsame optische Achse verläuft,
- wobei die Blende (B) und/oder die Blendenöffnung (D) in einem Bereich der gemeinsamen optischen Achse zwischen dem Sensor (3) und demjenigen Brennpunkt (F₁) der Objektivlinsen-Anordnung (1) liegt, der zwischen der Objektivlinsen-Anordnung (1) und Tubuslinsen-Anordnung (2) angeordnet ist,
**dadurch gekennzeichnet, dass**
- in einer gemeinsamen normal zur optischen Achse stehenden Brennebene (F_{E}) der Brennpunkt (F₁) der Objektivlinsen-Anordnung (1) und der Brennpunkt (F₂) der Tubuslinsen-Anordnung (2) zusammenfallen und
- die Blende (B) im Bereich zwischen der gemeinsamen Brennebene (F_{E}) und der Tubuslinsen-Anordnung (2) oder im Bereich zwischen der Tubuslinsen-Anordnung (2) und dem Sensor (3) angeordnet ist, sodass eine hyperzentrische perspektivische Projektion entsteht.

2. Mikroskopie-Vorrichtung (100) nach Anspruch 1, **dadurch gekennzeichnet, dass** die Blende (B) in einem Abstand (d) von größer als das 1,1-Fache der Objektivlinsen-Brennweite (f₁), insbesondere größer als das 1,3-Fache der Objektivlinsen-Brennweite (f₁), von der Objektivlinsen-Anordnung (1) angeordnet ist.

3. Mikroskopie-Vorrichtung (100) nach einem der vorangehenden Ansprüche, **dadurch gekennzeichnet, dass** die numerische Apertur der Objektivlinsen-Anordnung (1) durch die Blende (B) um 50% bis 95% reduziert ist.

4. Mikroskopie-Vorrichtung (100) nach einem der vorangehenden Ansprüche, **dadurch gekennzeichnet, dass** eine ringförmige Beleuchtungseinheit (5) vorgesehen ist, die zwischen dem Objektbereich (g) und der Objektivlinsen-Anordnung (1) angeordnet ist und auf den Objektbereich (g) gerichtet ist, wobei insbesondere vorgesehen ist, dass der Durchmesser der Beleuchtungseinheit (5) den Durchmesser der Objektivlinsen-Anordnung (1) übersteigt.

5. Mikroskopie-Vorrichtung (100) nach einem der vorangehenden Ansprüche, **dadurch gekennzeichnet, dass**
- eine, insbesondere ebene, Beleuchtungseinheit (5) zwischen der Objektivlinsen-Anordnung (1) und der Tubuslinsen-Anordnung (2), insbesondere parallel zur gemeinsamen optischen Achse und/oder von dieser beabstandet, angeordnet ist, und
- ein Strahlteiler (6) zwischen der Objektivlinsen-Anordnung (1) und der Tubuslinsen-Anordnung (2) angeordnet ist, wobei der Strahlteiler (6) in einem Winkel 10° bis 80°, insbesondere von 30° bis 60°, vorzugsweise 45°, zur gemeinsamen optischen Achse derart angeordnet und ausgerichtet ist, dass das von der Beleuchtungseinheit (5) abgestrahlte Licht über den Strahlteiler (6) durch die Objektivlinsen-Anordnung (1) hindurch auf den Objektbereich (g) fällt.

6. Mikroskopie-Vorrichtung (100) nach einem der Ansprüche 4 oder 5, **dadurch gekennzeichnet, dass** die Beleuchtungseinheit (5) dazu ausgebildet ist, den Objektbereich (g), insbesondere im Objektbereich (g) befindliche Gegenstände (4), kontinuierlich und/oder in vorgegebenen regelmäßigen zeitlichen Abständen zu beleuchten.

7. Mikroskopie-Vorrichtung (100) nach einem der vorangehenden Ansprüche, **gekennzeichnet durch** eine Steuereinheit (8) und eine Transporteinheit,
wobei die Transporteinheit dazu ausgebildet ist, Gegenstände (4) in einer Transportebene translatorisch entlang zumindest einer Transportrichtung (t) und/oder rotatorisch entlang zumindest eines Transportpfads durch den Objektbereich (g) der Mikroskopie-Vorrichtung (100), insbesondere kontinuierlich, zu transportieren,
wobei die Transportebene und/oder die zumindest eine Transportrichtung (t) im Wesentlichen senkrecht zur gemeinsamen optischen Achse ausgerichtet ist und/oder die Rotationsachse der Rotationsbewegung des zumindest einen Transportpfads parallel zur gemeinsamen optischen Achse ist und
wobei die Steuereinheit (8) dazu ausgebildet ist, die Transporteinheit zum Transport von Gegenständen (4) entlang der zumindest einen Transportrichtung (t) und/oder des zumindest einen Transportpfads anzusteuern.

8. Mikroskopie-Vorrichtung (100) nach Anspruch 7, **dadurch gekennzeichnet,**
- **dass** der Sensor (3) dazu ausgebildet ist, während des Transports eines zu untersuchenden Gegenstands (4) durch den Objektbereich (g) eine Abfolge von in vorgegebenen regelmäßigen zeitlichen Abständen, insbesondere in zeitlichen Abständen von 4 ms bis 12,5 ms, insbesondere von 6,5 bis 10 ms, aufgenommenen Momentaufnahmen zu erstellen,
- **dass** die Beleuchtungseinheit (5) dazu ausgebildet ist, den Objektbereich (g), insbesondere den im Objektbereich (g) befindlichen Gegenstand (4), kontinuierlich zu beleuchten und
- **dass** Steuereinheit (8) dazu ausgebildet ist, den Sensor (3) in vorgegebenen regelmäßigen zeitlichen Abständen zur Erstellung von Aufnahmen und die Beleuchtungseinheit (5) zur kontinuierlichen Beleuchtung des Objektbereichs (g) anzusteuern.

9. Mikroskopie-Vorrichtung (100) nach Anspruch 7 oder 8, **dadurch gekennzeichnet,**
- **dass** der Sensor (3) dazu ausgebildet ist, während des Transports eines zu untersuchenden Gegenstands (4) durch den Objektbereich (g) kontinuierlich Aufnahmen des Gegenstands (4) zu erstellen,
- **dass** die Beleuchtungseinheit (5) dazu ausgebildet ist, den Objektbereich (g), insbesondere den im Objektbereich (g) befindlichen Gegenstand (4), in vorgegebenen regelmäßigen zeitlichen Abständen, insbesondere in zeitlichen Abständen von 4 ms bis 12,5 ms, insbesondere von 6,5 bis 10 ms, zu beleuchten und
- **dass** die Steuereinheit (8) dazu ausgebildet ist, den Sensor (3) zur Erstellung von kontinuierlichen Aufnahmen und die Beleuchtungseinheit (5) zur Beleuchtung des Objektbereichs (g) in vorgegebenen regelmäßigen zeitlichen Abständen anzusteuern.

10. Mikroskopie-Vorrichtung (100) nach einem der Ansprüche 7 bis 9, **dadurch gekennzeichnet, dass** die Verschlusszeit des Sensors (3) derart gewählt ist, dass die durch den Transport des Gegenstands (4) relativ zum Sensor (3) bedingte Bewegungsunschärfe am Sensor (3) kleiner als 1 Pixel ist.

11. Mikroskopie-Vorrichtung (100) nach einem der Ansprüche 7 bis 10, **dadurch gekennzeichnet, dass** die Beleuchtungsdauer der Beleuchtungseinheit (5) derart gewählt ist, dass die durch den Transport des Gegenstands (4) relativ zum Sensor (3) bedingte Bewegungsunschärfe am Sensor (3) kleiner als 1 Pixel ist.

## Claims

1. Microscopy device (100) for producing three-dimensional images from objects (4) located in a flat object region (g), comprising an objective lens arrangement (1) having an objective lens focal length (f₁), a tube lens arrangement (2) having a tube lens focal length (f₂) and a sensor (3),
- wherein the objective lens arrangement (1) and tube lens arrangement (2) have a common optical axis,
- wherein an object region (g) for arranging objects (4) to be examined in the region of the objective lens arrangement (1) facing away from the tube lens arrangement (2) is arranged spaced from the objective lens arrangement (1), and
- wherein the sensor (3) is arranged in the region of the tube lens arrangement (2) facing away from the objective lens arrangement (1) spaced from the tube lens arrangement (2), wherein the sensor (3) is configured to represent images of objects (4) to be examined, in particular to capture them,
- wherein an aperture (B) is provided, through the aperture opening (D) of which extends the common optical axis,
- wherein the aperture (B) and/or the aperture opening (D) lies in a region of the common optical axis between the sensor (3) and the focal point (F₁) of the objective lens arrangement (1) which is arranged between the objective lens arrangement (1) and tube lens arrangement (2),
**characterised in that**
- in a common focal plane (F_{E}) standing normal to the optical axis, the focal point (F₁) of the objective lens arrangement (1) and the focal point (F₂) of the tube lens arrangement (2) coincide and
- the aperture (B) is arranged in the region between the common focal plane (F_{E}) and the tube lens arrangement (2) or in the region between the tube lens arrangement (2) and the sensor (3), such that a hypercentric perspective projection results.

2. Microscopy device (100) according to claim 1, **characterised in that** the aperture (B) is arranged at a distance (d) of greater than 1.1 times the objective lens focal length (f₁), in particular greater than 1.3 times the objective lens focal length (f₁), from the objective lens arrangement (1).

3. Microscopy device (100) according to any of the preceding claims, **characterised in that** the numeric aperture of the objective lens arrangement (1) is reduced by the aperture (B) by 50% to 95%.

4. Microscopy device (100) according to any of the preceding claims, **characterised in that** an annular illumination unit (5) is provided which is arranged between the object region (g) and the objective lens arrangement (1) and is directed onto the object region (g), wherein in particular it is provided that the diameter of the illumination unit (5) exceeds the diameter of the objective lens arrangement (1).

5. Microscopy device (100) according to any of the preceding claims, **characterised in that**
- an in particular flat illumination unit (5) is arranged between the objective lens arrangement (1) and the tube lens arrangement (2), in particular parallel to the common optical axis and/or spaced therefrom, and
- a beam splitter (6) is arranged between the objective lens arrangement (1) and the tube lens arrangement (2), wherein the beam splitter (6) is arranged and aligned at an angle of 10° to 80°, in particular from 30° to 60°, preferably 45°, to the common optical axis, such that the light emitted from the illumination unit (5) via the beam splitter (6) through the objective lens arrangement (1) falls onto the object region (g).

6. Microscopy device (100) according to any of claims 4 or 5, **characterised in that** the illumination unit (5) is configured to illuminate the object region (g), in particular objects (4) located in the object region (g), continuously and/or at predetermined regular temporal intervals.

7. Microscopy device (100) according to any of the preceding claims, **characterised by** a control unit (8) and a transport unit,
wherein the transport unit is configured to transport objects (4) in a transport plane in a translational manner along at least one transport direction (t) and/or in a rotational manner along at least one transport path through the object region (g) of the microscopy device (100), in particular continuously,
wherein the transport plane and/or the at least one transport direction (t) is aligned substantially perpendicularly to the common optical axis and/or the rotational axis of the rotational movement of the at least one transport path is parallel to the common optical axis, and
wherein the control unit (8) is configured to control the transport unit for the transport of objects (4) along the at least one transport direction (t) and/or the at least one transport path.

8. Microscopy device (100) according to claim 7, **characterised in**
- **that** the sensor (3) is configured, during the transport of an object (4) to be examined through the object region (g) to create a series of snapshots taken at predetermined regular temporal intervals, in particular at temporal intervals of 4 ms to 12.5 ms, in particular of 6.5 to 10 ms,
- **that** the illumination unit (5) is configured to continuously illuminate the object region (g), in particular the object (4) located in the object region (g), and
- **that** the control unit (8) is configured to control the sensor (3) at predetermined regular temporal intervals to create images and to control the illumination unit (5) for the continuous illumination of the object region (g).

9. Microscopy device (100) according to claim 7 or 8, **characterised in**
- **that** the sensor (3) is configured, during the transport of an object (4) to be examined through the object region (g), to create continuous images of the object (4),
- **that** the illumination unit (5) is configured to illuminate the object region (g), in particular the object (4) located in the object region (g), at predetermined regular temporal intervals, in particular at temporal intervals of 4 ms to 12.5 ms, in particular of 6.5 to 10 ms, and
- **that** the control unit (8) is configured to control the sensor (3) to create continuous images and to control the illumination unit (5) for the illumination of the object region (g) at predetermined regular temporal intervals.

10. Microscopy device (100) according to any of claims 7 to 9, **characterised in that** the shutter speed of the sensor (3) is selected such that the motion blur at the sensor (3) caused by the transport of the object (4) relative to the sensor (3) is less than 1 pixel.

11. Microscopy device (100) according to any of claims 7 to 10, **characterised in that** the illumination duration of the illumination unit (5) is selected such that the motion blur at the sensor (3) caused by the transport of the object (4) relative to the sensor (3) is less than 1 pixel.

## Revendications

1. Dispositif de microscopie (100) pour la génération d'images en trois dimensions d'objets (4) se trouvant dans une zone d'objet (g) plane, comprenant un agencement de lentilles d'objectif (1) avec une distance focale de lentille d'objectif (f₁), un agencement de lentilles tubulaires (2) avec une distance focale de lentille tubulaire (f₂) et un capteur (3),
- dans lequel l'agencement de lentilles d'objectif (1) et l'agencement de lentilles tubulaires (2) présentent un axe optique commun,
- dans lequel une zone d'objet (g) pour l'agencement d'objets (4) à examiner dans la zone de l'agencement de lentilles d'objectif (1) opposée à l'agencement de lentilles tubulaires (2) est agencée espacée de l'agencement de lentilles d'objectif (1), et
- dans lequel le capteur (3) est agencé espacé de l'agencement de lentilles tubulaires (2) dans la zone de l'agencement de lentilles tubulaires (2) à l'opposite de l'agencement de lentilles d'objectif (1), dans lequel le capteur (3) est configuré afin de reproduire, en particulier de prendre des images d'objets (4) à examiner,
- dans lequel un diaphragme (B) est prévu, à travers l'ouverture de diaphragme (D) duquel s'étend l'axe optique commun,
- dans lequel le diaphragme (B) et/ou l'ouverture de diaphragme (D) se trouve dans une zone de l'axe optique commun entre le capteur (3) et le foyer (F₁) de l'agencement de lentilles d'objectif (1) qui est agencé entre l'agencement de lentilles d'objectif (1) et l'agencement de lentilles tubulaires (2),
**caractérisé en ce que**
- dans un plan focal (F_{E}) commun se trouvant orthogonal à l'axe optique, le point focal (F₁) de l'agencement de lentilles d'objectif (1) et le point focal (F₂) de l'agencement de lentilles tubulaires (2) coïncident et
- le diaphragme (B) est agencé dans la zone entre le plan focal (F_{E}) commun et l'agencement de lentilles tubulaires (2) ou dans la zone entre l'agencement de lentilles tubulaires (2) et le capteur (3), de sorte qu'une projection en perspective hypercentrée apparaisse.

2. Dispositif de microscopie (100) selon la revendication 1, **caractérisé en ce que** le diaphragme (B) est agencé à une distance (d) supérieure à 1,1 fois la distance focale de lentille d'objectif (f₁), en particulier supérieure à 1,3 fois la distance focale de lentille d'objectif (f₁), de l'agencement de lentilles d'objectif (1).

3. Dispositif de microscopie (100) selon l'une quelconque des revendications précédentes, **caractérisé en ce que** l'ouverture numérique de l'agencement de lentilles d'objectif (1) par le diaphragme (B) est réduite de 50 % à 95 %.

4. Dispositif de microscopie (100) selon l'une quelconque des revendications précédentes, **caractérisé en ce qu'**une unité d'éclairage (5) annulaire est prévue, laquelle est agencée entre la zone d'objet (g) et l'agencement de lentilles d'objectif (1) et est dirigée sur la zone d'objet (g), dans lequel il est en particulier prévu que le diamètre de l'unité d'éclairage (5) dépasse le diamètre de l'agencement de lentilles d'objectif (1).

5. Dispositif de microscopie (100) selon l'une quelconque des revendications précédentes, **caractérisé en ce que**
- une unité d'éclairage (5) en particulier plane, est agencée entre l'agencement de lentilles d'objectif (1) et l'agencement de lentilles tubulaires (2), en particulier parallèlement à l'axe optique commun et/ou à distance de celui-ci, et
- un séparateur de faisceau (6) est agencé entre l'agencement de lentilles d'objectif (1) et l'agencement de lentilles tubulaires (2), dans lequel le séparateur de faisceau (6) est agencé et orienté selon un angle de 10° à 80°, en particulier de 30° à 60°, de préférence de 45°, par rapport à l'axe optique commun, de sorte que la lumière émise par l'unité d'éclairage (5) tombe sur la zone d'objet (g) par le biais du séparateur de faisceau (6) à travers l'agencement de lentilles d'objectif (1).

6. Dispositif de microscopie (100) selon l'une quelconque des revendications 4 ou 5, **caractérisé en ce que** l'unité d'éclairage (5) est configurée afin d'éclairer la zone d'objet (g), en particulier des objets (4) se trouvant dans la zone d'objet (g), en continu et/ou à intervalles temporels réguliers prédéfinis.

7. Dispositif de microscopie (100) selon l'une quelconque des revendications précédentes, **caractérisé par** un dispositif de commande (8) et une unité de transport,
dans lequel l'unité de transport est configurée afin de transporter des objets (4) dans un plan de transport en translation le long d'au moins un sens de transport (t) et/ou en rotation le long d'au moins une voie de transport à travers la zone d'objet (g) du dispositif de microscopie (100), en particulier en continu,
dans lequel le plan de transport et/ou l'au moins un sens de transport (t) est orienté sensiblement perpendiculairement à l'axe optique commun et/ou l'axe de rotation du mouvement de rotation de l'au moins une voie de transport est parallèle à l'axe optique commun et
dans lequel le dispositif de commande (8) est configuré afin de commander l'unité de transport pour le transport d'objets (4) le long de l'au moins un sens de transport (t) et/ou de l'au moins une voie de transport.

8. Dispositif de microscopie (100) selon la revendication 7, **caractérisé en ce que**
- le capteur (3) est configuré afin de générer, pendant le transport d'un objet (4) à examiner à travers la zone d'objet (g), une suite d'instantanés pris à intervalles temporels réguliers prédéfinis, en particulier à intervalles temporels de 4 ms à 12,5 ms, en particulier de 6,5 à 10 ms,
- l'unité d'éclairage (5) est configurée afin d'éclairer en continu la zone d'objet (g), en particulier l'objet (4) se trouvant dans la zone d'objet (g) et
- le dispositif de commande (8) est configuré afin de commander le capteur (3) à intervalles temporels réguliers prédéfinis pour la génération d'images et l'unité d'éclairage (5) pour l'éclairage continu de la zone d'objet (g).

9. Dispositif de microscopie (100) selon la revendication 7 ou 8, **caractérisé en ce que**
- le capteur (3) est configuré afin de générer en continu des images de l'objet (4) pendant le transport d'un objet (4) à examiner par à travers la zone d'objet (g),
- l'unité d'éclairage (5) est configurée afin d'éclairer la zone d'objet (g), en particulier l'objet (4) se trouvant dans la zone d'objet (g), à intervalles temporels réguliers prédéfinis, en particulier à intervalles temporels de 4 ms à 12,5 ms, en particulier de 6,5 à 10 ms et
- le dispositif de commande (8) est configuré afin de commander le capteur (3) pour la génération d'images continues et l'unité d'éclairage (5) pour l'éclairage de la zone d'objet (g) à intervalles temporels réguliers prédéfinis.

10. Dispositif de microscopie (100) selon l'une quelconque des revendications 7 à 9, **caractérisé en ce que** le temps de pose du capteur (3) est choisi de telle manière que le flou de mouvement conditionné par le transport de l'objet (4) par rapport au capteur (3) au niveau du capteur (3) soit inférieur à 1 pixel.

11. Dispositif de microscopie (100) selon l'une quelconque des revendications 7 à 10, **caractérisé en ce que** la durée d'éclairage de l'unité d'éclairage (5) est choisie de telle manière que le flou de mouvement conditionné par le transport de l'objet (4) par rapport au capteur (3) au niveau du capteur (3) soit inférieur à 1 pixel.
